# EUROPEAN PATENT APPLICATION

(11) **EP 3 974 962 A1**
(43) Date of publication of application: **30.03.2022**
(21) Application number: 21161666.9
(22) Date of filing: 10.03.2021
(51) Int. Cl.: G06F 8/60

(54) **METHOD, APPARATUS, ELECTRONIC DEVICE, READABLE STORAGE MEDIUM AND PROGRAM FOR DEPLOYING APPLICATION**

(30) Priority: 23.09.2020 CN 202011011067
(71) Applicant: Beijing Baidu Netcom Science and Technology Co., Ltd., Beijing 100085 (CN)
(72) Inventor: LU, Danfeng, Haidian District Beijing 100085 (CN); ZHAO, Xin, Haidian District Beijing 100085 (CN); CHEN, Sheng, Haidian District Beijing 100085 (CN); XIE, Jingru, Haidian District Beijing 100085 (CN)
(74) Representative: Mewburn Ellis LLP

(57) **Abstract**

Embodiments of the present disclosure provide a method, apparatus, electronic device and computer readable storage medium for deploying an application, and relate to the technical fields of edge computing, application models, application deployment and operation and maintenance. A specific embodiment of the method includes: receiving an application configuration parameter transmitted from a user, and constructing a target application model in a cloud according to the application configuration parameter and an application model technology; and issuing, in response to a synchronization request being initiated by a edge computing framework, the target application model to each of edge computing nodes covered by the edge computing framework, and controlling the edge computing framework to deploy the target application model at each of the edge computing nodes. The embodiment only requires the user to complete the modeling construction of the target application on the cloud management component, and the subsequent deployment, operation and maintenance may be left to the background interaction between the cloud management component and the edge computing framework, without the user being responsible for the complex maintenance of the whole life cycle, and thus the user experience is better.

## Description

### TECHNICAL FIELD

The present disclosure relates to the technical field of data processing, in particular, to the technical fields of edge computing, application models, application deployment and operation and maintenance, and more in particular, to a method, apparatus, electronic device and computer readable storage medium for deploying an application.

### BACKGROUND

With the development of electronic informationization, the edge computing closest to the user terminal gradually attracts people's attention. Therefore, it is a research focus in the art how to better utilize the edge computing network constructed by the edge computing nodes to provide the user with more convenient application services.

The existing technology provides an edge computing platform based on Kubernetes (a containerized management system), which requires managers to be responsible for the management of the whole life cycle of the application.

### SUMMARY

Embodiments of the present disclosure provide a method, apparatus, electronic device and computer readable storage medium for deploying an application.

In a first aspect, an embodiment of the present disclosure provides a method for deploying an application, the method including: receiving an application configuration parameter transmitted from a user, and constructing a target application model in a cloud according to the application configuration parameter and an application model technology; and issuing, in response to a synchronization request being initiated by a edge computing framework, the target application model to each of edge computing nodes covered by the edge computing framework, and controlling the edge computing framework to deploy the target application model at each of the edge computing nodes.

In a second aspect, an embodiment of the present disclosure provides an apparatus for deploying the application, the apparatus including: a target application model cloud construction unit, configured to receive an application configuration parameter transmitted from a user, and construct a target application model in a cloud according to the application configuration parameter and an application model technology; and a target application model node deployment unit, configured to issue, in response to a synchronization request being initiated by a edge computing framework, the target application model to each of edge computing nodes covered by the edge computing framework, and control the edge computing framework to deploy the target application model at each of the edge computing nodes.

In a third aspect, an embodiment of the present disclosure provides an electronic device, the electronic device including: at least one processor; and a memory in communication with at least one processor, where the memory stores instructions executable by at least one processor, and the instructions, when executed by the at least one processor, cause the at least one processor to implement the method for deploying the application as described in any one of the implementations of the first aspect.

In a fourth aspect, an embodiment of the present disclosure provides a non-transitory computer readable storage medium storing computer instructions which cause a computer to implement the method for deploying the application as described in any one of the implementations of the first aspect.

In a fifth aspect, an embodiment of the present disclosure provides a computer program including instructions, where the instructions, when the computer program is executed by a computer, cause the computer to implement the method for deploying the application as described in any one of the implementations of the first aspect.

According to the method, apparatus, electronic device and computer readable storage medium for deploying the application, the application configuration parameter transmitted from a user is first received, and the target application model is constructed in the cloud according to the application configuration parameter and the application model technology; and then in response to the synchronization request being initiated by the edge computing framework, the target application model is issued to each of edge computing nodes covered by the edge computing framework, and the edge computing framework is controlled to deploy the target application model at each of the edge computing nodes. The present disclosure provides an edge computing platform composed of a user-oriented cloud management component and an edge computing framework deployed at edge computing nodes, which only requires the user to complete the modeling construction of the target application on the cloud management component, and the subsequent deployment, operation and maintenance may be left to the background interaction between the cloud management component and the edge computing framework. The application configuration parameters are modeled based on the idea of the application model, and the deployment of the cloud model at the underlying nodes is completed through synchronization between the upper and lower layers, without the user being responsible for the complex maintenance of the whole life cycle, and thus the user experience is better.

It should be appreciated that the content described in this part is not intended to identify the key or critical features of the embodiments of the present disclosure, nor is it intended to limit the scope of the present disclosure. The other features of the present disclosure will become easy to understand through the following description.

### BRIEF DESCRIPTION OF THE DRAWINGS

After reading the detailed description of nonlimiting embodiments with reference to the following accompanying drawings, other features, objectives and advantages of the present disclosure will be more apparent:
Fig. 1 is an example system architecture in which the present disclosure may be applied;
Fig. 2 is a flow diagram of a method for deploying an application according to an embodiment of the present disclosure;
Fig. 3 is a flow chart of a method for deploying an application according to an embodiment of the present disclosure;
Fig. 4 is a structural diagram of an edge computing platform according to an embodiment of the present disclosure;
Fig. 5 is a structural block diagram of an apparatus for deploying an application according to an embodiment of the present disclosure; and
Fig. 6 is a structural diagram of an electronic device adapted to execute the method for deploying the application according to an embodiment of the present disclosure.

### DETAILED DESCRIPTION OF EMBODIMENTS

The present disclosure will be described below in detail with reference to the accompanying drawings and in combination with the embodiments. It should be appreciated that the specific embodiments described herein are merely used for explaining the present disclosure, rather than limiting the present disclosure. In addition, it should be noted that, for the ease of description, only the parts related to the present disclosure are shown in the accompanying drawings.

It should also be noted that the embodiments in the present disclosure and the features in the embodiments may be combined with each other on a non-conflict basis. The present disclosure will be described below in detail with reference to the accompanying drawings and in combination with the embodiments.

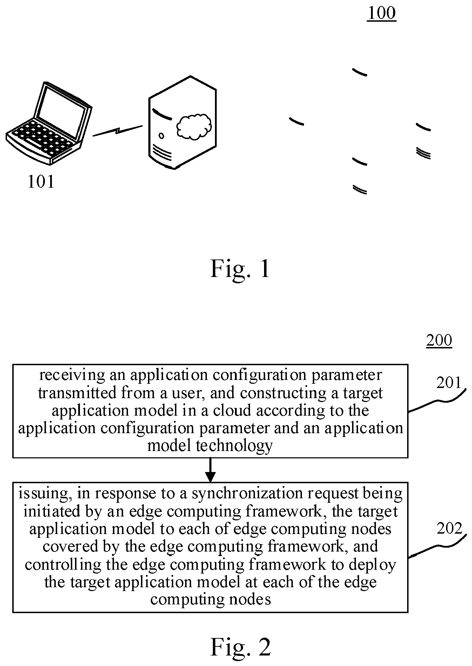

Fig. 1 shows an example system architecture 100 in which a method, apparatus, electronic device and computer readable storage medium for deploying an application of the present disclosure may be applied.

As shown in Fig. 1, the system architecture 100 may include a user terminal 101, a cloud management server 102 and an edge computing framework 103. The edge computing framework is deployed at each of the edge computing nodes, i.e., the edge computing framework 103 covers each of the edge computing nodes in the edge computing network. The data connection between the user terminal 101 and the cloud management server 102, and the data connection between the cloud management server 102 and each of the edge computing nodes covered by the edge computing framework may be established in multiple ways, such as wired or wireless communication links, or optical fiber cables.

The user may use the user terminal 101 to execute data interaction with the cloud management server 102, and deploy applications applied to the edge computing network to the edge computing nodes covered by the edge computing framework through the cloud management server 102. Various applications, such as application deployment applications and instant messaging applications, may be installed on the user terminal 101, the cloud management server 102 and the edge computing framework 103 deployed at the edge computing nodes, to achieve the above objectives.

The user terminal 101, the cloud management server 102 and the edge computing nodes at which the edge computing framework 103 is deployed may be hardware or software. When the user terminal 101 is hardware, the user terminal 101 may be various electronic devices having an application configuration parameter issuing capability, including but not limited to, a smart phone, a tablet, a laptop and a desktop; when the user terminal 101 is software, the user terminal 101 may be installed on the above electronic devices, and may be implemented as multiple software pieces or software modules, or as a single software piece or software module, which are not specifically limited herein. When the cloud management server 102 and the edge computing nodes are hardware, the cloud management server 102 may be implemented as a distributed server cluster composed of multiple servers, or as a single server; when the cloud management server 102 and the edge computing nodes are software, the cloud management server 102 and the edge computing nodes may be implemented as multiple software pieces or software modules, or as a single software piece or software module, which are not specifically limited herein.

The cloud management server 102 may provide various services through various built-in applications. Taking an application deployment application that provides the user with the ability to deploy a target application to an edge computing network service as an example. When the cloud management server 102 runs this application, the following effects may be achieved: an application configuration parameter transmitted from the user through the user terminal device 101 is first received; then, according to the application configuration parameter and an application model technology, the modeling construction of the target application is completed in the cloud storage space of the cloud management server 102, i.e., the target application model is constructed; and after that, in response to a synchronization request being initiated by the edge computing framework, the target application model is issued to each of the edge computing nodes covered by the edge computing framework, and the edge computing framework is controlled to deploy the target application model at each of the edge computing nodes.

It should be noted that the application configuration parameters may not only be received from the user terminal 101, but also be pre-stored locally in the cloud management server 102 in various ways. When the cloud management server 102 detects that the data has been stored locally (such as a pending task remaining before the start of processing), the data may be directly acquired from the local. In this case, the example system architecture 100 may also not include the user terminal 101.

The method for deploying the application according to the subsequent embodiments of the present disclosure is generally executed by the cloud management server 102, and correspondingly, the apparatus for deploying the application is also generally provided in the cloud management server 102.

It should be appreciated that the number of the user terminal, the cloud management server and the edge computing nodes in Fig. 1 is merely illustrative. Any number of user terminals, cloud management servers and edge computing nodes may be provided based on actual requirements.

Referring to Fig. 2, Fig. 2 is a flow diagram of a method for deploying an application according to an embodiment of the present disclosure. The flow 200 includes the following steps 201 to 202.

Step 201 includes receiving an application configuration parameter transmitted from a user, and constructing a target application model in a cloud according to the application configuration parameter and an application model technology;

This step is intended to receive the application configuration parameter transmitted from the user (such as through the user terminal 101 shown in Fig. 1) by execution body of the method for deploying the application, and to construct the target application model in the cloud storage space of the execution body according to the application configuration parameter and the concept of the application model, i.e., to complete the construction of the target application model in the cloud.

The application configuration parameter is used to configure the parameter of the target application for implementing a target function or service. Taking implementing a user access log collection function as an example, the target application may be named as a log collection application, and in order to implement the log collection function, the log collection application may be configured to collect the log source parameter of the user log, the identification parameter for identifying which data are the log data in a data flow, and a configuration parameter for a storage mode and a storage address for storing the collected log. The above different sub-functions may also be abstracted as a function component of the log collection application.

The application model is a concept first presented in the cloud native field, is an application-oriented modeling representation, and is mainly used to build an application-centric platform on which developers may focus on applications and complete the definitions of deployable components. The present disclosure applies this concept to the field of edge computing to help building an edge computing platform that provides convenient services for the user terminal using the concept of the application model, since the service provider is the application deployed at the edge computing nodes.

Step 202 includes issuing, in response to a synchronization request being initiated by an edge computing framework, the target application model to each of edge computing nodes covered by the edge computing framework, and controlling the edge computing framework to deploy the target application model at each of the edge computing nodes.

On the basis of step 201, this step is intended to issue, in response to a synchronization request being initiated by an edge computing framework, the target application model to each of edge computing nodes covered by the edge computing framework, and to complete the deployment of the target application model at each of the edge computing nodes through the edge computing framework.

The edge computing framework is deployed at each of the edge computing nodes constituting the edge computing network, and is used for supporting the normal operation of the edge computing nodes as a background rule. The edge computing nodes may actively initiate a synchronization request to the execution body under the control of the edge computing framework. The purpose of the synchronization request is to confirm to the execution body whether there is an application model to be deployed at the edge computing nodes. When there is an application to be deployed at the edge computing nodes, the application model may be pulled from the execution body, and the deployment of the application model at each of the edge computing nodes is completed under the control of the edge computing framework.

When the user does not restrict the deployment object of the target application model, the target application model may be deployed at any edge computing node or all edge computing nodes; when the user selects a deployment object of the target application model, the edge computing framework should also complete the deployment of the target application model at the corresponding edge computing node according to the indicated deployment object.

It should be appreciated that this embodiment provides a two-stage implementation schema in which the target application model is first constructed in the cloud, and then the target application model is deployed at the underlying edge computing nodes by a cloud control edge computing framework, because in this way, the user only needs to interact with the cloud to complete the modeling construction of the application, complex operations, such as subsequent deployment and operation and maintenance operations, do not need to be executed by the user, thereby greatly simplifying the operations of the user, and improving the convenience of developing and deploying new functions or services on the edge computing platform.

By applying the method for deploying the application according to the embodiment of the present disclosure, an edge computing platform composed of a user-oriented cloud management component and an edge computing framework deployed at edge computing nodes are constructed, and only requires the user to complete the modeling construction of the target application on the cloud management component, and the subsequent deployment, operation and maintenance may be left to the background interaction between the cloud management component and the edge computing framework. The application configuration parameters are modeled based on the idea of an application model, and the deployment of the cloud model at the underlying nodes is completed through synchronization between the upper layer and the lower layer, without the user being responsible for the complex maintenance of the whole life cycle, and thus the user experience is better.

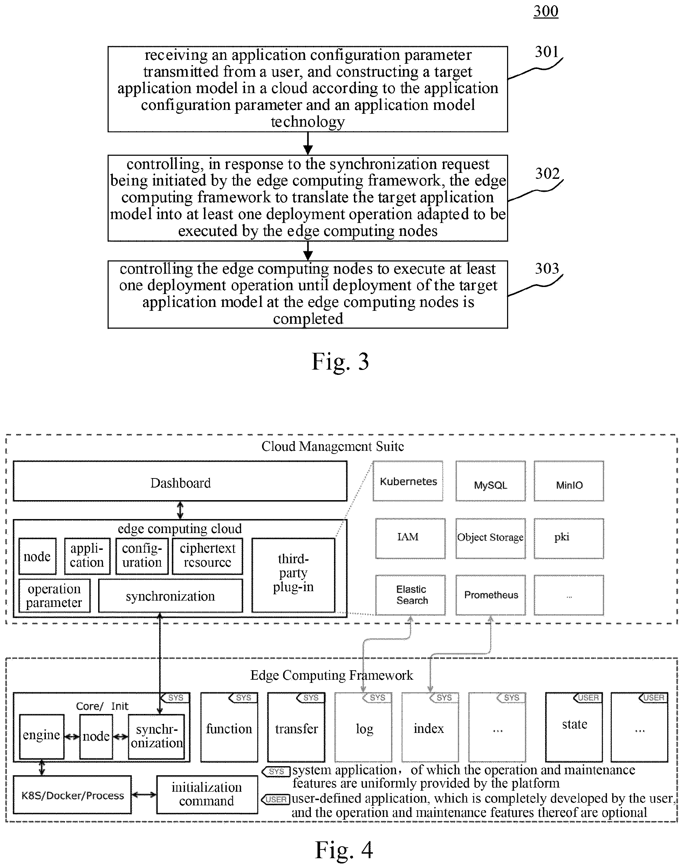

Referring to Fig. 3, Fig. 3 is a flow chart of a method for deploying an application according to another embodiment of the present disclosure. The flow 300 includes the following steps 301 to 303.

Step 301 includes receiving an application configuration parameter transmitted from a user, and constructing a target application model in a cloud according to the application configuration parameter and an application model technology.

This step is consistent with step 201 shown in Fig. 2. Same content of this step may refer to the corresponding part of the previous embodiment, and details are not described herein.

Step 302 includes controlling, in response to the synchronization request being initiated by the edge computing framework, the edge computing framework to translate the target application model into at least one deployment operation adapted to be executed by the edge computing nodes.

This step is intended to control by the execution body the edge computing framework to translate the target application model into at least one deployment operation adapted to be executed by the edge computing nodes. The translation operation needs to be executed because the cloud environment is not necessarily consistent with the environment of the edge computing nodes. When the operation environments are inconsistent, the operation for constructing the target application model, executed in user-oriented computing, is not necessarily correctly executed at the edge computing nodes.

To ensure that the target application model may be successfully deployed at the edge computing nodes and achieve the required functions or services, the edge computing framework is required to translate the target application model into the deployment operation adapted to be executed by specific underlying edge computing nodes according to the received target application model.

To achieve this objective, an operation instruction conversion relationship for implementing a given deployment operation in different operation environments may be pre-recorded in the edge computing framework, so as to convert the deployment operation instruction of the target application model in the cloud into the deployment operation adapted to be performed by the edge computing nodes according to the operation instruction conversion relationship. Specifically, the operation instruction conversion relationship may be implemented by an approach such as a regular expression.

Step 303 includes controlling the edge computing nodes to execute at least one deployment operation until deployment of the target application model at the edge computing nodes is completed.

On the basis of step 302, this step is intended to control the edge computing nodes to execute at least one deployment operation by the execution body until deployment of the target application model at the edge computing nodes is completed. Specifically, to accelerate the deployment efficiency, a part of multiple deployment operations, which do not have dependencies, may be executed in parallel; and a part of the multiple deployment operations, which have dependencies or causality relationships, may be executed in a serial way.

Further, in view of the fact that devices used as the edge computing nodes may have large differences, type information of different edge computing nodes (e.g., different operating systems and different operating environments, and the like) may be acquired through the edge computing framework, then the target application model is translated into at least one deployment operation adapted to be performed by the edge computing node of each type included in the type information, respectively, and finally each type of the edge computing node is controlled to execute at least one deployment operation adapted to the type, so as to more accurately complete the deployment of the target application model at different edge computing nodes.

Further, after the target application model is deployed at the edge computing nodes, the edge computing framework may be controlled to verify whether the deployed target application model may achieve the required function through issuing a test data packet, thereby ensuring the availability of the target application model at the edge computing nodes. If the availability is authenticated, a response signal of successful deployment may also be returned to the execution body so that the execution body confirms that the target application model has completed the deployment at the underlying edge computing nodes.

On the basis of previous embodiments, this embodiment provides a specific scheme for deploying the target application model of the cloud at the edge computing nodes through step 302- step 303, that is, the effect of the difference between the cloud environment and the edge computing node environment on the deployment operation is fully considered, thereby ensuring that the target application model may be effectively deployed at the edge computing nodes as far as possible.

On the basis of any of previous embodiments, in order to satisfy the user requirements for deploying the target application model at the specified edge computing nodes, the execution body may also receive the operation state information of each of the edge computing nodes periodically uploaded by the edge computing framework. The operation state information may not only represent the actual operation state of the different edge computing nodes, but also reflect the differences in attribute parameters of the different edge computing nodes, so as to screen partial edge computing nodes that match the user requirements based on the differences in operation states and attribute parameters. Further, the execution body may determine the target operation and maintenance mode corresponding to the operation state information according to the preset node operation and maintenance mode, so that the execution body notifies the edge computing framework that the operation and maintenance should be executed at the corresponding edge computing nodes according to the target operation and maintenance mode.

On the basis of any of previous embodiments, an application type definition instruction transmitted from a user may be received, and the type of the target application model may be adjusted to a system application or a user-defined application according to the application type definition instruction, so as to execute corresponding configuration, and operation and maintenance according to different node configuration modes and different operation and maintenance modes respectively corresponding to the system application and the user-defined application. For example, the application model of the system application may be configured to enhance the security of the system application by using approaches such as resource encryption, ciphertext storage and multi-backup storage, and the user-defined application may be flexibly selected according to a differentiation requirement proposed by the user.

On the basis of any of previous embodiments, in order to further satisfy the requirements of the user, a corresponding third-party function plug-in may be added according to the additional requirement of the user, so as to return the corresponding result according to the usage mode in response to the third-party function plug-in being invoked. That is, the additional function is added by adding a third-party function plug-in to the execution body, such as introducing ElasticSearch (providing a distributed multi-user full-text search engine) to provide full-text keyword search capabilities for a log collected by the edge computing nodes, and customizing monitoring of data collected by the edge computing nodes by entering Prometheus (an open-source monitoring alarm solution).

For further understanding, the present disclosure further provides a specific implementation scheme in combination with a specific application scenario where there is an actual need to develop an edge computing platform on which the user only needs to focus on the development and use of a service application. On the one hand, the platform does not restrict the development mode of the application, and does not bind the platform, and on the other hand, the platform uniformly provides the features related to operation and maintenance, shields the underlying infrastructure, that is, provides a simple and easy-to-use edge computing platform for the user, and adapts to as many edge devices as possible.

To meet this actual need, this embodiment provides an edge computing platform including a user-oriented cloud management suite (Cloud Management Suite, equivalent to the cloud management server described in previous embodiments) and an edge computing framework (Edge Computing Framework) deployed at edge computing nodes, as shown in Fig. 4.

The cloud management suite is responsible for managing all resources, such as edge nodes, applications and configurations in the cloud, managing the deployment of the applications, managing the pre-configuration of the nodes, providing various applications, and implementing issuing of cloud computing capabilities to edge operations through other services of the integrated cloud. Specifically, the cloud management suit may have the following core functional modules.

A node management module uniformly manages edge nodes, displays node states and operation application states, and provides operation and maintenance features for the nodes; an application management module uniformly defines application models and elements ,such as application resources, configuration resources and ciphertext resources, and the applications may be divided into a system application and a user application, where the system application is provided by the platform, including various applications providing the operation and maintenance features, such as log collection, monitoring item collection, remote debugging, capacity expansion and reduction; a plug-in management module introduces third-party services through plug-ins, including services required for providing the operation and maintenance features, the services including IAM (Identity and Access Management), Object Storage (OS), PKI (Public Key Infrastructure), ElasticSearch, Prometheus, and Kubernetes, Mysql, MinIO (an object storage service), as shown in FIG. 4; and an end cloud synchronization module is responsible for data synchronization with the edge nodes, and on the one hand, all application model data matched by the nodes are synchronized to the nodes, and on the other hand, data such as node states and application states reported by the edge nodes are received.

The edge computing framework is deployed at the edge nodes, manages all applications at the nodes, maintains data synchronization between nodes and the cloud, and the like, translates an application model into an operation of an underlying infrastructure, implements deployment of an application to an infrastructure such as Kubernetes (an containerized application for managing multiple hosts in the cloud platform) and Docker (a container), or is directly run as a process on a device, and performs data exchange with a third-party functional plug-in on the cloud management component. Specifically, the edge computing framework may have the following core modules.

A framework starting module supporting starting the edge framework in a script way, automatically adapts the edge device, and selects the operation way (such as, Kubernetes, Docker or Process) of the application according to the device conditions, and if the device conditions allow, the Kubernetes is adopted as far as possible, because the infrastructure is the most thorough in shielding the platform and the most complete in function, and therefore, the deployment environment of the device is hardly concerned any more, and only resources, such as CPU and memory, need to be ensured to be sufficient; an end cloud synchronization module is responsible for data synchronization with the cloud, and on the one hand, the application model data expected by the cloud is synchronized to the local nodes, and on the other hand, data such as node states and application states are reported; and an application engine module is responsible for the operation of translating the application model issued by the cloud into an adapted infrastructure and, if necessary, injecting the configuration related to the operation and maintenance features, for example, selecting the Kubernetes as the deployment infrastructure can translate the application model into the Deployment (a functional module under the Kubernetes) of the Kubernetes, and this module provides a uniform application model interface, and different infrastructures provide different implementations.

An example of an application deployment that starts log collection is given as the following specific implementation flow:
1. a user starts in the cloud management suit a log collection function for nodes, and only needs to configure the log receiver information, and does not need to personally configure the log collection module;
2. the user configures the application in the cloud management suit and determine the edge computing nodes corresponding to the receiver by matching through a label, and the subsequent flow is automatically completed by the platform;
3. the cloud management suit automatically updates the log collection information mentioned in step 1 and the application information mentioned in step 2 to the local shadow space, and waits for the edge computing framework of the nodes to initiate the synchronization;
4. the edge computing framework periodically reports the state of its local shadow space (including actual log collection information and application information) to the cloud management suite; and in this case, if the cloud management suite determines that the record of the state in its own shadow space is inconsistent, the cloud management suite returns the expected latest data of the cloud shadow to the edge, and the edge computing framework updates the data to the local shadow space; and
5. when updating the local shadow, if the edge computing framework finds a data change, the edge computing framework triggers the application update, converts the application model into the configuration of the underlying deployment infrastructure, and implements the deployment; and in this case, if the log collection function is started, the log collection module is started synchronously to inject the log collection information.

It should be appreciated that the log in step 1 is taken as an example, but is not limited in practice to this application feature related to the operation and maintenance, and the features further includes monitoring, tracing, debugging, copy scaling and the like; and in step 5, all the functional modules related to the operation and maintenance features belong to the system application, and configuration injection and module startup of these functional modules are performed by the edge computing framework, the configuration injection mode may includes a mounted file, an environment variable or a startup parameter. The underlying deployment infrastructures are also not limited to Kubernetes, Docker and the like, and may be extended to implement modes for various application deployments, or even a process mode.

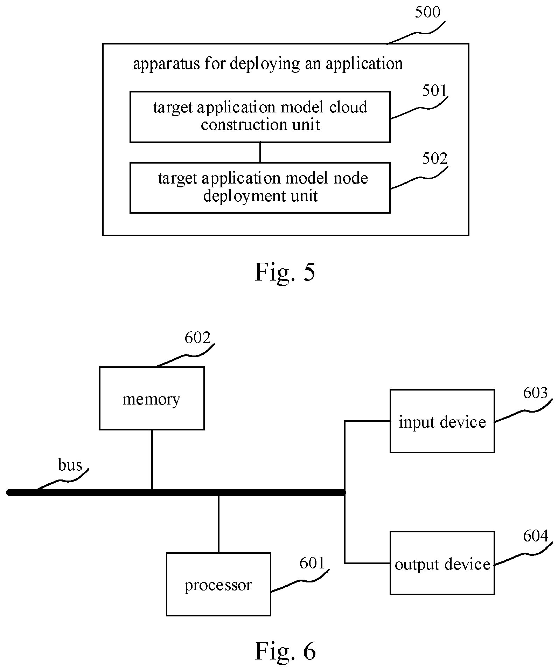

Further referring to Fig. 5, as an implementation of the method shown in above figures, the present disclosure provides an embodiment of an apparatus for deploying an application, which corresponds to the embodiment of the method shown in Fig. 2. The apparatus may specifically be applied to various electronic devices.

As shown is Fig. 5, an apparatus 500 for deploying an application according to some embodiments of the present disclosure may include: a target application model cloud construction unit 501, and a target application model node deployment unit 502. The target application model cloud construction unit 501 is configured to receive an application configuration parameter transmitted from a user, and construct a target application model in a cloud according to the application configuration parameter and an application model technology; and the target application model node deployment unit 502 is configured to issue, in response to a synchronization request being initiated by an edge computing framework, the target application model to each of edge computing nodes covered by the edge computing framework, and control the edge computing framework to deploy the target application model at each of the edge computing nodes.

In the apparatus 500 for deploying the application according to some embodiments, the specific processing of the target application model cloud construction unit 501 and the target application model node deployment unit 502 and the technical effects thereof may be described with reference to the related description of step 201 to 202 in corresponding embodiments of Fig. 2, and details are not described herein.

In some alternative implementations of this embodiment, the target application model node deployment unit 502 may include a deployment subunit for controlling the edge computing framework to deploy the target application model at each of the edge computing nodes, and the deployment subunit may include:
a deployment operation translation module, configured to control the edge computing framework to translate the target application model into at least one deployment operation adapted to be executed by the edge computing nodes; and
a deployment operation execution module, configured to control the edge computing nodes to execute at least one deployment operation until the deployment of the target application model at the edge computing nodes is completed.

In some alternative implementations of this embodiment, the deployment operation translation module may be further configured to:
acquire type information of different edge computing nodes through the edge computing framework;
translate the target application model respectively into at least one deployment operation adapted to be executed by the edge computing node of each type included in the type information; and
the deployment operation execution module is further configured to:
   control each type of the edge computing nodes to execute at least one deployment operation adapted to the type.

In some alternative implementations of this embodiment, the apparatus 500 for deploying the application may further include:
an operation state information receiving unit, configured to receive operation state information of the edge computing nodes periodically uploaded by the edge computing framework; and
an operation and maintenance mode determining unit, configured to determine a target operation and maintenance mode corresponding to the operation state information according to a preset node operation and maintenance mode, and execute operation and maintenance at the corresponding edge computing nodes according to the determined target operation and maintenance mode.

In some alternative implementations of this embodiment, the apparatus 500 for deploying the application may further include:
an application type definition instruction receiving unit, configured to receive an application type definition instruction transmitted from the user; and
an application type adjustment unit, configured to adjust a type of the target application model to a system application or a user-defined application according to the application type definition instruction, where the system application and the user-defined application correspond to different node configuration modes and different operation and maintenance modes.

In some alternative implementations of this embodiment, the apparatus 500 for deploying the application may further include:
a third-party function plug-in adding unit, configured to add a corresponding third-party function plug-in according to an additional requirement of the user; and
a result return unit, configured to return, in response to the third-party function plug-in being invoked, a corresponding result according to a usage mode.

This embodiment exists as the embodiment of the apparatus corresponding to the embodiment of the method. According to the apparatus for deploying the application according to the embodiment of the present disclosure, an edge computing platform composed of a user-oriented cloud management component and an edge computing framework deployed at edge computing nodes is constructed, and only requires the user to complete the modeling construction of the target application on the cloud management component, and the subsequent deployment, operation and maintenance may be left to the background interaction between the cloud management component and the edge computing framework. The application configuration parameters are modeled based on the idea of an application model, and the deployment of the cloud model to the underlying nodes is completed through the synchronization between the upper and lower layers, without the user being responsible for the complex maintenance of the whole life cycle, and thus the user experience is better.

According to an embodiment of the present disclosure, the present disclosure further provides an electronic device and a computer readable storage medium.

Fig. 6 shows a block diagram of an electronic device adapted to implement a method for deploying an application according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 6, the electronic device includes one or more processors 601, a memory 602, and interfaces for connecting components, including high-speed interfaces and low-speed interfaces. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected, and the electronic device provides some of the necessary operations (such as a server array, a set of blade servers, or a multiprocessor system). An example of a processor 601 is shown in Fig. 6.

The memory 602 is a non-transitory computer readable storage medium according to the present disclosure. The memory stores instructions executable by at least one processor to cause the at least one processor to execute the method for deploying the application according to the present disclosure. The non-transitory computer readable storage medium of the present disclosure stores computer instructions for causing a computer to execute the method for deploying the application according to the present disclosure.

As a non-transitory computer readable storage medium, the memory 602 may be used to store non-transitory software programs, non-transitory computer executable programs and modules, such as the program instructions or modules corresponding to the method for deploying the application in the embodiment of the present disclosure (such as the target application model cloud construction unit 501 and the target application model node deployment unit 502 shown in Fig. 5). The processor 601 runs the non-transitory software programs, instructions and modules stored in the memory 602 to execute various functional applications and data processing of the server, thereby implementing the method for deploying the application in the embodiment of the method.

The memory 602 may include a storage program area and a storage data area, where the storage program area may store an operating system, and an application program required by at least one function; and the storage data area may store data created by the electronic device when executing the method for deploying the application. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for deploying the application. Examples of such networks include, but are not limited to, the Internet, enterprise intranets, local area networks, mobile communication networks and combinations thereof.

The electronic device adapted to execute the method for deploying the application may further include an input device 603 and an output device 604. The processor 601, the memory 602, the input device 603 and the output device 604 may be interconnected through a bus or other means, and an example of a connection through a bus is shown in Fig. 6

The input device 603 may receive input number or character information, and generate key signal input related to user settings and functional control of the electronic device adapted to execute the method for deploying the application, such as a touch screen, a keypad, a mouse, a track pad, a touch pad, a pointer bar, one or more mouse buttons, a trackball, or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component, or front-end component. The components of the system may be interconnected by any form or medium of digital data communication (such as a communication network). Examples of communication networks include a local area network (LAN), a wide area network (WAN) and the Internet.

The computer system may include a client and a server. The client and the server are generally remote from each other and interact generally through a communication network. The relationship between the client and the server is generated by running the computer programs having a client-server relationship with each other on the corresponding computer. The server may be a cloud server, also known as a cloud computing server or a cloud host, which is a host product in the cloud computing service system and may solve the defects of difficult management and weak service scalability existing among a conventional physical host and a VPS (Virtual Private Server) service.

According to the technical solution of the embodiment of the present disclosure, an edge computing platform composed of a user-oriented cloud management component and an edge computing framework deployed at edge computing nodes is constructed, and only requires the user to complete the modeling construction of the target application on the cloud management component, and the subsequent deployment, operation and maintenance may be left to the background interaction between the cloud management component and the edge computing framework. The application configuration parameters are modeled based on the idea of an application model, and the deployment of the cloud model at the underlying nodes is completed through synchronization between the upper and lower layers, without the user being responsible for the complex maintenance of the whole life cycle, and thus the user experience is better.

It should be appreciated that the steps of reordering, adding or deleting may be executed using the various forms shown above. For example, the steps described in the present disclosure may be executed in parallel or sequentially or in a different order, so long as the expected results of the technical solutions disclosed in the present disclosure may be realized, and no limitation is imposed herein.

The above specific description is not intended to limit the scope of the present disclosure. It should be appreciated by those skilled in the art that various modifications, combinations, sub-combinations, and substitutions may be made depending on design requirements and other factors. Any modifications, equivalents, and modifications that fall within the spirit and principles of the present disclosure are intended to be included within the scope of the present disclosure.

## Claims

1. A method for deploying an application, the method comprising:
receiving (201) an application configuration parameter transmitted from a user, and constructing a target application model in a cloud according to the application configuration parameter and an application model technology; and
issuing (202), in response to a synchronization request being initiated by an edge computing framework, the target application model to each of a plurality of edge computing nodes covered by the edge computing framework, and controlling the edge computing framework to deploy the target application model at the each of the plurality of edge computing nodes.

2. The method according to claim 1, wherein the controlling the edge computing framework to deploy the target application model at the each of the plurality of edge computing nodes, comprises:
controlling (302) the edge computing framework to translate the target application model into at least one deployment operation adapted to be executed by the plurality of edge computing nodes; and
controlling (303) the plurality of edge computing nodes to execute the at least one deployment operation until deployment of the target application model at the plurality of edge computing nodes is completed.

3. The method according to claim 2, wherein the controlling the edge computing framework to translate the target application model into at least one deployment operation adapted to be executed by the plurality of edge computing nodes, comprises:
acquiring type information of different edge computing nodes through the edge computing framework;
translating the target application model into the at least one deployment operation adapted to be executed by an edge computing node of each type comprised in the type information respectively; and
the controlling the plurality of edge computing nodes to execute the at least one deployment operation, comprises:
controlling the each type of the edge computing node to execute at least one deployment operation adapted to the each type.

4. The method according to any one of claims 1 to 3, the method further comprising:
receiving operation state information of the plurality of edge computing nodes periodically uploaded by the edge computing framework; and
determining a target operation and maintenance mode corresponding to the operation state information according to a preset node operation and maintenance mode, and executing operation and maintenance at the corresponding plurality of edge computing nodes according to the determined target operation and maintenance mode.

5. The method according to any one of claims 1 to 4, the method further comprising:
receiving an application type definition instruction transmitted from the user; and
adjusting a type of the target application model to a system application or a user-defined application according to the application type definition instruction, wherein the system application and the user-defined application correspond to different node configuration modes and different operation and maintenance modes.

6. The method according to any one of claims 1 to 5, the method further comprising;
adding a corresponding third-party function plug-in according to an additional requirement of the user; and
returning, in response to the third-party function plug-in being invoked, a corresponding result according to a usage mode.

7. An apparatus for deploying an application, the apparatus comprising units for executing the method according to any one of claims 1 to 6.

8. An electronic device, comprising:
at least one processor; and
a memory in communication with the at least one processor, wherein the memory stores instructions executable by the at least one processor, and the instructions, when executed by the at least one processor, cause the at least one processor to execute the method for deploying the application according to any one of claims 1 to 6.

9. A non-transitory computer readable storage medium storing computer instructions which cause a computer to execute the method for deploying the application according to any one of claims 1 to 6.

10. A computer program comprising instructions, wherein the instructions, when the computer program is executed by a computer, cause the computer to execute the method for deploying the application according to any one of claims 1 to 6.
